# EUROPEAN PATENT APPLICATION

(11) **EP 1 061 187 A1**
(43) Date of publication of application: **20.12.2000**
(21) Application number: 00111390.1
(22) Date of filing: 26.05.2000
(51) Int. Cl.: E02F 9/16

(54) **Material handling vehicle**

(30) Priority: 29.05.1999 GB 9912545
(71) Applicant: J.C. BAMFORD EXCAVATORS LIMITED, Uttoxeter Staffordshire ST14 5JP (GB)
(72) Inventor: Brown David John, Staffordshire ST14 8Px (GB)
(74) Representative: Leach, John Nigel

(57) **Abstract**

A material handling vehicle (10) including a structure (11), a turret (14) rotatably mounted on the structure, an arm (16) and an operator's cab (15) provided on the turret, wherein the operator's cab has a first operating position (20) and a second operating position (21), the first operating position comprising first control means for operation of at least the arm (16) and the second operating position comprising second control means for driving a vehicle (10).

## Description

This invention relates to a material handling vehicle.

It is desirable that a material handling vehicle be able to be driven to or between working sites on public roads, and that such vehicles are provided with the greatest possible visibility for an operator when driving the vehicle. Where a vehicle comprises an arm, such an arm should obstruct the driver's field of view to the minimum possible extent.

An aim of the invention is to provide a new or improved material handling vehicle.

According to the present invention we provide a material handling vehicle including a structure, a turret rotatably mounted on the structure, an arm and an operator's cab provided on the turret, wherein the operator's cab has a first operating position and a second operating position, the first operating position comprising first control means for operation of at least the arm and the second operating position comprising second control means for driving the vehicle.

The arm may be mounted on the turret at a connection position and may be movable to a stored configuration extending from said connection position in a direction away from the direction of forward travel of the material handling vehicle.

The arm may be movable to said stored configuration by rotating the turret.

When the arm is in its stored configuration, the second operating position may be disposed in the forward direction of the operator's cab.

The connection position may be disposed on the turret forward of and offset from the end of the operator's cab toward which the first operating position is disposed.

Preferably the connection position is disposed on the turret such that when the arm is in its stored configuration, the connection position is located at or towards a side of the turret away from the direction of forward travel of the vehicle.

Preferably the connection position is disposed on the turret such that when the arm is in its stored position, the connection position lies on a longitudinal axis of the vehicle.

The arm may be mounted on the turret by a king post which permits slewing and pivoting movement of the arm relative to the turret.

The operator's cab may be provided with a rotatable seat rotatable between the first operating position and the second operating position.

The first control means may comprise levers and/or a joystick to operate at least the arm.

The second control means may comprise a steering wheel and pedals of conventional type.

The invention will now be described by way of example only with reference to the accompanying drawings, wherein.
Figure 1 shows a material handling vehicle according to the present invention,
Figure 2 shows the material handling vehicle of Figure 1 in a different configuration,
Figure 3 is a top view of the material handling vehicle of Figure 1, and
Figure 4 is a top view of the material handling vehicle of Figure 2.

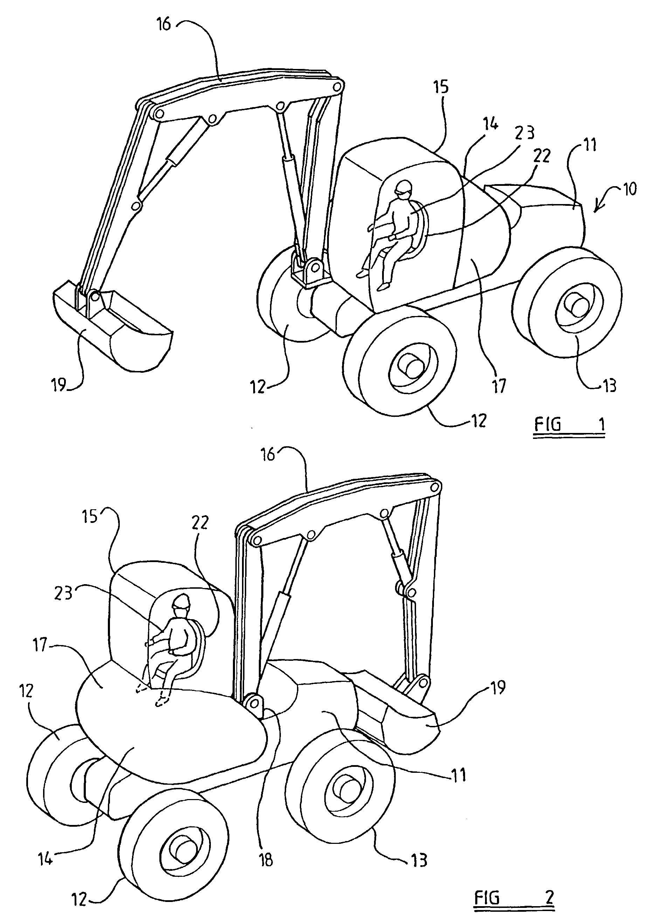

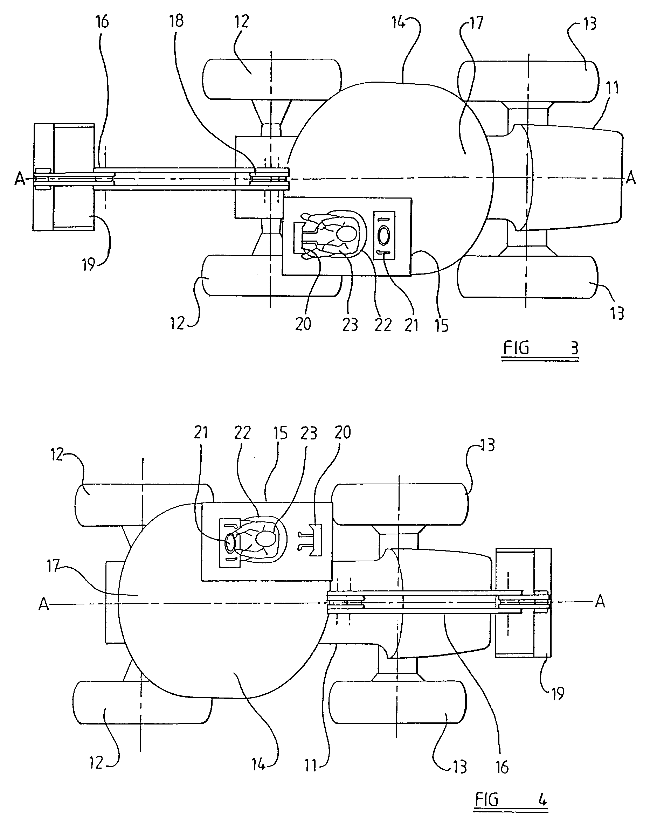

As shown in the Figures, the invention comprises a material handling vehicle 10 comprising a structure in the form of a chassis 11 provided with a pair of front wheels 12 and a pair of rear wheels 13. Pivotably mounted on the chassis 11 via a suitable rotatable connection (not visible) is a turret 14. Mounted on the turret 14 is an operator's cab 15 and an arm 16. A counterweight 17 is provided behind the operator's cab 15. As seen in Figures 3 and 4, the operator's cab 15 is disposed offset from a centre line A -A of the vehicle, whilst the aim 16 is mounted on a bracket on an edge of the turret 14 by a king post 18 for both slewing and pivoting movement. The connection position at which the king post 18 is mounted forward and offset of the operator's cab, such that when the aim is in its stored configuration, the connection position is located at a side of the turret away from the direction of forward travel of the vehicle. When the turret is in either position shown in Figures 1 and 3 or 2 and 4, the king post is located on the centre line A-A.

In the present example, the aim 16 comprises a three part articulated assembly operable by a plurality of fluid-operated rams, but any other suitable form of arm may be provided as desired. Attached to one end of the arm 16 is a material handling implement 19, in the present example a bucket. Preferably, the material handling implement 19 is provided with a hydraulic quick hitch to allow fast and efficient changes of the material handling implement.

As shown in Figures 3 and 4, the operator's cab 15 comprises a first operating position 20 and a second operating position 21. The first operating position 20 is provided with first control means to operate the arm 16 and turret 14. The first operating position comprises levers of conventional type, but may also comprise a joystick or any suitable control means as desired. The second operating position 21 is provided with second control means suitable for driving the vehicle, in the present example a conventional steering wheel and pedals. The operator's cab 15 is further provided with an operator's seat 22 which is rotatable through 180 degrees such that it faces the first operating position 20 or the second operating position 21. Suitable locking means may be provided to maintain the operator's seat 22 facing either the first operating position or second operating position as desired. Appropriate interlocking means may also be provided if required.

When it is desired that the arm 16 of the vehicle 10 be operated, the turret is rotated to the position shown in Figure 1 such that the arm 16 projects outwardly of the vehicle. The operator's seat 22 is rotated such that it faces the first operating position and so that an operator 23 occupies the position shown in Figure 1. The operator 23 is thus able to operate the arm 16 and material handling implement 19 whilst watching the arm 16 and material handling implement 19. In the present example, the arm 16 may be slewed through an angle of 180 degrees relative to the turret. The turret itself may be rotated through 360 degrees. In the present example, the turret is rotated by a hydrostatic drive.

When it is required that the vehicle travels on a road, the turret 14 and arm 16 are rotated to a stored configuration shown in Figures 2 and 4. In this position, the arm 16 extends from the king post 18 in a direction away from the direction of forward travel of the vehicle 10 and may be locked in the stored configuration shown by any suitable means. The operator's seat 22 is rotated to face the second operating position 21 which is provided with suitable controls for driving the vehicle on the road, in the present example a steering wheel and conventional pedals. Any other appropriate controls may be provided as desired.

In this position, the field of view of the operator 23 in a forward direction is not obstructed by the arm 16. The counterweight 17 is shaped to provide a desired visibility, and acts as a front bumper to provide operator protection in the event of a collision.

In the present example, the vehicle comprises an engine disposed rearwardly of the turret 14. Drive from the engine may be transmitted by a hydrostatic drive and an automatic gearbox of conventional type to all four wheels although any suitable drive means may of course be used as required. A pump driven by the engine provides hydraulic pressure to be supplied to the hydraulic systems to operate the arm and other systems. The machine is preferably provided with suitable stabilisers, ideally at front and rear, to engage the ground and stabilise the vehicle during material handling.

In the present example, the front axle is non-pivotable whilst the rear axle is pivoted to provide oscillation. The front wheels are separately pivotable, and steeling of the vehicle may be performed in an all wheel steer mode, a crab steer mode or a two wheel steer. In the latter mode, the rear axle is fixed in its forward direction, and steering is effected through the front wheels. Locking the rear axle adds to the stability of the vehicle when travelling on the road. Alternatively of course the machine could be provided with rear wheel steering.

It is desirable that the counterweight swings out no more than a minimum possible extent beyond the width of the vehicle to enable the vehicle to be used in confined spaces. The counterweight 17 preferably swings out no more than 500mm beyond the width of the vehicle and in the present example no more than 250mm.

In the present example, the vehicle has a top speed in excess of 35 kilometres per hour, for example in the range 40 to 50 kilometres per hour.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A material handling vehicle including a structure, a turret rotatably mounted on the structure, an arm and an operator's cab provided on the turret, wherein the operator's cab has a first operating position and a second operating position, the first operating position comprising first control means for operation of at least the arm and the second operating position comprising second control means for driving the vehicle.

2. A material handling vehicle according to Claim 1 wherein the arm is mounted on the turret at a connection position and is movable to a stored configuration extending from said connection position in a direction away from the direction of forward travel of the material handling vehicle.

3. A material handling vehicle according to Claim 2 wherein the arm is movable to said stored configuration by rotating the turret.

4. A material handling vehicle according to Claim 2 or Claim 3 wherein when the arm in its stored configuration, the second operating position is disposed in the forward direction of the operator's cab.

5. A material handling vehicle according to any one of Claims 2 to 4 wherein the connection position is disposed on the turret forward of and offset from the end of the operator's cab towards which the first operating position is disposed.

6. A material handling vehicle according to any one of Claims 2 to 5 wherein the connection position is disposed on the turret such that when the arm is in its stored configuration, the connection position is located at or towards an edge of the turret away from the direction of forward travel of the vehicle.

7. A material handling vehicle according to any one of Claims 2 to 6 wherein the connection position is disposed on the turret such that when the arm is in its stored configuration, the connection position lies on a longitudinal axis of the vehicle.

8. A material handling vehicle according to any one of the preceding claims wherein the arm is mounted on the turret by a king post which permits slewing and pivoting movement of the arm relative to the turret.

9. A material handling vehicle according to any one of the preceding claims wherein the operator's cab is provided with a rotatable seat, rotatable between the first operating position and the second operating position.

10. A material handling vehicle according to any one of the preceding claims wherein the first control means comprises levers and/or a joystick of conventional type to operate at least the arm.

11. A material handling vehicle according to any one of the preceding claims wherein the second control means comprises a steering wheel and pedals of conventional type.
